# EUROPEAN PATENT APPLICATION

(11) **EP 1 223 755 A2**
(43) Date of publication of application: **17.07.2002**
(21) Application number: 02250215.7
(22) Date of filing: 11.01.2002
(51) Int. Cl.: H04N 5/775

(54) **Disc playback system and display unit**

(30) Priority: 12.01.2001 JP 2001005639; 27.09.2001 JP 2001297320; 28.09.2001 JP 2001301003
(71) Applicant: MATSUSHITA ELECTRIC INDUSTRIAL CO., LTD., Kadoma-shi, Osaka 571-8501 (JP)
(72) Inventor: Mori, Toshiaki, Minou-shi, Osaka 562-0001 (JP); Ibaraki, Susumu, Sakai.shi, Osaka 590-0026 (JP); Hamasaki, Hiroshi, Hirakata-shi, Osaka 573-0075 (JP); Katta, Noburo, Itami-shi, Hyogo 644-0017 (JP); Kurosaki, Toshihiko, Kobe-shi, Hyogo 657-0023 (JP); Yamamoto, Akihiro, Osaka.shi, Osaka 532-0022 (JP)
(74) Representative: Senior, Alan Murray

(57) **Abstract**

A disc playback system comprising a disc drive (1) for reading a coded signal recorded on a disc type recording medium, and transmitting the coded signal through a synchronous channel of a digital bus (3), and plural display units (2-1,...2-n) each receiving the coded signal from the digital bus (3), and decoding and displaying the coded signal, wherein each of the plural display units (2-1,...2-n) outputs disc control information, including a read command for controlling the disc drive (1) so as to read the coded signal from the disc type recording medium, and one of the plural display units (2-1,...2-n) receives the disc control information from the other display units, and the display unit (2-1,...2-n) receives, at least as for the read command, the read commands from all of the other display units (2-1,...2-n) which are operating and, thereafter, outputs one read command to the disc drive (1). Therefore, all of the display units (2-1,...2-n) performing display operations, can display the same picture at the same time.

## Description

The present invention relates to disc playback systems and, more particularly, to a disc playback system having plural display units.

In a conventional disc playback system for reproducing data of a movie or the like recorded on a DVD (Digital Versatile Disc), a disc drive reads a coded signal from the DVD, a decoder decodes the coded signal into a video signal and an audio signal, and a display unit displays pictures and outputs sounds. A display unit such as a television display unit or the like is not provided with a decoder for decoding a coded signal, and it receives, through an input terminal, analog video and audio signals which are obtained by decoding a coded signal with an external decoder that is usually integrated with a disc drive, and displays pictures and outputs sounds.

In the conventional disc playback system comprising the external decoder and the display unit such as a television display unit, when pictures and sounds reproduced by a single external decoder ara displayed by plural display units, the analog video and audio signals outputted from the external decoder are distributed by a signal distributor, and the distributed signals are inputted to the respective display units for display.

As described above, in the conventional disc playback system, since the analog signals are transmitted through a line between the external decoder and the display unit, the transmitted signals are easily affected by noise from the outside, resulting in degraded picture quality.

Further, as digital-systematization of vehicle-mounted devices has been advanced in recent years, there are cases where a plurality of electronic devices to be used in a motor vehicle are bidirectionally connected through a digital bus. Considering that the above-described disc playback system is mounted on a motor vehicle, a digital bus and an analog signal transmission line coexist, resulting in a complicated wiring structure that is undesirable.

Meanwhile, Japanese Published Patent Application No. 2000-152159 discloses a disc playback system in which each of plural display units is provided with a function of decoding a coded signal, whereby noise is reduced, and wiring is simplified when it is mounted on a motor vehicle. To be specific, in the disc playback system disclosed in this literature, plural display units each having a function of decoding a coded signal are independently supplied with parameters (static parameters) which are recorded on a disc from a disc drive, and the respective display units perform video and audio display operations on the basis of the static parameters and independent settings (dynamic parameters) in the respective display units, whereby the user can view different displays on the respective display units. However, since the parameters to be used for playback and display are independently set for each of the plural display units, it is difficult for the user to view the same display on all of the display units at the same time. Especially when the disc playback system is used in a motor vehicle, audio playback may be carried out using a common audio system that is mounted on the motor vehicle while video display is carried out. on the screens of the respective display units, it is not desirable that the respective display units perform different displays.

The present invention is made to solve the above-described problems and has for its object to provide a disc playback system having plural display units, in which all of the display units. performing display operations can display the same picture at the same time.

Other objects and advantages of the invention will become apparent from the detailed description that follows. The detailed description and specific embodiments described are provided only for illustration since various additions and modifications within the scope of the invention will be apparent to those of skill in the art from the detailed description.

According to a first aspect of the present invention, there is provided a disc playback system comprising a disc drive for reading a coded signal recorded on a disc type recording medium, and transmitting the coded signal through a synchronous channel of a digital bus, and plural display units each receiving the coded signal from the digital bus, and decoding and displaying the coded signal, wherein each of the plural display units outputs disc control information including a read command for controlling the disc drive so as to read the coded signal from the disc type recording medium; and one of the plural display units receives the disc control information from the other display units, and the display unit receives, at least as for the read command, the read commands from all of the other display units which are operating and, thereafter, outputs one read command to the disc drive. Therefore, the disc playback system can correctly decode disc information, and all of the display units performing display operations can display the same picture at the same time.

According to a second aspect of the present invention, there is provided a disc playback system comprising a disc drive for reading a coded signal recorded on a disc type recording medium, and transmitting the coded signal through a synchronous channel of a digital bus, and plural display units each receiving the coded signal from the digital bus, and decoding and displaying the coded signal, wherein each of the plural display units performs operation on the basis of a periodic signal whose temporal relationship with data on the synchronous channel is constant; one of the plural display units generates decoder control information including at least a playback command, outputs the decoder control information to the other display units, and executes decoder control at a timing when a predetermined time t (t: positive real number) has passed from the n-th periodic signal (n: natural number) after the display unit outputted the decoder control information; and each of the other display units receives the decoder control information, and executes decoder control at a timing when the predetermined time t has passed from the n-th periodic signal after the display unit received the decoder control information. Therefore, the temporal relationship between disc information to be inputted and the decoder control information is always constant, whereby all of the display units performing display operations can display the same picture at the same time.

According to a third aspect of the present invention, there ' is provided a disc playback system comprising a disc drive for reading a coded signal recorded on a DVD, and transmitting the coded signal through a synchronous channel of a digital bus, and plural display units for receiving the coded signal from the digital bus and decoding and displaying the coded signal; wherein each of the plural display units generates an operation clock of 27MHz from a transmission path clock of the digital bus, and performs decoding operation on the basis of the operation clock. Therefore, underflow and overflow of data are avoided, whereby all of the display units performing display operations can display the same picture at the same time.

According to a fourth aspect of the present invention, there is provided a display unit for receiving a coded signal that is read from a disc type recording medium by a disc drive, and decoding and displaying the coded signal; the display unit includes a disc control information output means for outputting disc control information including a read command for controlling the disc drive so as to read the coded signal from the disc type recording medium; and the disc control information output means receives disc control information including the read command from other display units connected to the digital bus, and it receives, at least as for the read command, the read commands from all of the other display units connected to the digital bus and, thereafter, outputs one read command to the disc drive. Therefore, a main display unit, by which all of display units performing display operations can display the same picture at the same time, is realized.

According to a fifth aspect of the present invention, there is provided a display unit for receiving a coded signal which is read from a disc type recording medium by a disc drive and transmitted through a synchronous channel of a digital bus, and decoding and displaying the coded signal; the display unit performs operation on the basis of a periodic signal whose temporal relationship with data on the synchronous channel is constant; and the display unit comprises: a decoder control information generation means for generating decoder control information including at least a playback command; a decoder control information output means for outputting the decoder control information generated by the decoder control information generation means to another display unit connected to the digital bus; and a decoder control means for executing decoder control, employing the decoder control information generated by the decoder control generation means, at a timing when a predetermined time t (t: positive real number) has passed from the n-th periodic signal (n: natural number) after the decoder control information output means outputted the decoder control information to the other display unit. Therefore, a main display unit in a disc playback system, by which all of display units performing display operations can display the same picture at the same time, is realized.

According to a sixth aspect of the present invention, there is provided a display unit for receiving a coded signal which is read from a disc type recording medium by a disc drive and transmitted through a synchronous channel of a digital bus, and decoding and displaying the coded signal; the display unit performs operation on the basis of a periodic signal whose temporal relationship with data on the synchronous channel is constant; and the display unit comprises: a decoder control information reception means for receiving decoder control information including at least a playback command, from another display unit connected to the digital bus; and a decoder control means for execuling decoder control, employing the decoder control information received by the decoder control reception means, at a liming when a predetermined time t (t: positive real number) has passed from the n-th periodic signal (n: natural number) after the decoder control information reception means received the decoder control information from the other display unit. Therefore, a sub display unit in a disc playback system, by which all of display units performing display operations can display the same picture at the same time, is realized.

According to a seventh aspect of the present invention, there is provided a display unit for receiving a coded signal from a digital bus, and decoding and displaying the coded signal, and the display unit includes a decoding clock generation means for generating a decoding clock of 27MHz for performing decoding operation, from a transmission path clock of the digital bus. Therefore, when a plurality of the display units are connected to the digital bus, a display playback system, in which all of the display units performing display operations can perform the same operation at the same time, is realized.

According to an eighth aspect of the present invention, there is provided a disc playback system comprising a disc drive for reading and outputting a coded signal recorded on a disc type recording medium, and plural display units for decoding and displaying the coded signal outputted from the disc drive, and the display playback system includes a parameter control means performing a control such that a display unit which is performing display operation holds parameters used for the display operation and, when another display unit has started up, the display unit performing display operation transmits the parameters to the other display unit which has started up. Therefore, all of the display units performing display operations can display the same picture at the same time.

According to a ninth aspect of the present invention, there is provided a disc playback system comprising a disc drive for reading and outputting a coded signal recorded on a disc type recording medium, and plural display units for decoding and displaying the coded signal outputted from the disc drive, wherein one of the display units performing display operations transmits parameters which are stored in the self unit and used for the display operation, to another display unit which has started up. Therefore, all of the display units performing display operations can display the same picture at the same time.

According to a tenth aspect of the present invention, there is provided a disc playback system comprising a disc drive for reading and outputting a coded signal recorded on a disc type recording modium, and plural display units for decoding and displaying the coded signal outputted from the disc drive, wherein the disc drive is provided with a parameter storage means for holding parameters which are used for display operation of a display unit and, when another display unit has started up, the disc drive transmits the parameters which are used by the display unit performing the display operation, to the other display unit which has started up. Therefore, all of the display units performing display operations can display the same picture at the same time.

According to an eleventh aspect of the present invention, there is provided a disc playback system comprising a disc drive for reading and outputting a coded signal recorded on a disc type recording medium, and plural display units for decoding and displaying the coded signal outputted from the disc drive,
wherein, when at least one of the plural display units receives an operation input from a user to the self unit and parameters which are stored in the self unit and used for display operation are altered, the display unit transmits the altered parameters to all of the other display units performing display operations. Therefore, when there is an operation input to any of the display units, the operation input is reflected throughout the display units performing display operations, whereby all of the display units performing display operations can display the same picture at the same time.

According to a twelfth aspect of the present invention, there is provided a disc playback system comprising a disc drive for reading and outputting a coded signal recorded on a disc type recording medium, and plural display units for decoding and displaying the coded signal outputted from the disc drive, wherein one of the plural display units controls the disc drive; when a display unit other than the display unit controlling the disc drive receives a user's operation input for controlling the disc drive, the display unit transmits a control command for controlling the disc drive to the display unit controlling the disc drive; and when the display unit controlling the disc drive receives the control command for controlling the disc drive from the display unit other than the self unit, it controls the disc drive on the basis of the control command, and transmits altered parameters to all of the other display units performing display operations. Therefore, when there is an operation input to any of the display units, the operation input is reflected throughout the display units performing display operations, whereby all of the display units performing display operations can display the same picture at the same time.

According to a thirteenth aspect of the present invention, there is provided a disc playback system comprising a disc drive for reading and outputting a coded signal recorded on a disc type recording medium, and plural display units for decoding and displaying the coded signal outputted from the disc drive,
wherein the display units include decoding means for decoding the coded signal; and one of the display units transmits a control signal to the decoding means of the other display units. Therefore, when there is an operation input to any of the display units, the operation input is reflected throughout the display units performing display operations, whereby all of the display units performing display operations can display the same picture at the same time.

Figure 1 is a block diagram illustrating a disc playback system according to a first embodiment of the present invention.

Figure 2 is a block diagram illustrating a disc drive included in the disc playback system according to the first embodiment.

Figure 3 is a block diagram illustrating display units according to the first embodiment.

Figures 4(a) and 4(b) are block diagrams illustrating decoder synchronization means included in the display units according to the first embodiment.

Figure 5 is a diagram for explaining the operations of the decoder synchronization means in the display units according to the first embodiment.

Figure 6 is a diagram for explaining an example of a data transmission method by the disc playback system according to the first embodiment.

Figure 7 is a block diagram illustrating a disc playback system according to a second embodiment of the present invention.

Figure 8 is a block diagram illustrating a DVD display unit included in the disc playback system according to the second embodiment.

Figure 9 is a block diagram illustrating a DVD decoder included in the DVD display unit according to the second embodiment.

Figure 10 is a flowchart for explaining the operation of a sub display unit in the disc playback system according to the second embodiment.

Figure 11 is a flowchart for explaining the operation of a main display unit in the disc playback system according to the second embodiment.

Figure 12 is a diagram illustrating an example of a format of parameter data.

Figure 13 is a block diagram illustrating a modification of a disc playback system according to the second embodiment.

Figure 14 is a diagram illustrating the appearance of a DVD display unit.

Figure 15 is a flowchart for explaining the operation of a sub display unit in a disc playback system according to a third embodiment of the present invention.

Figure 16 is a flowchart for explaining the operation of a main display unit in the disc playback system according to the third embodiment.

Figure 17 is a diagram illustrating another example of a format of parameter data.

Figure 18 is a block diagram illustrating a DVD drive included in a disc palyback system according to a fourth embodiment of the present invention.

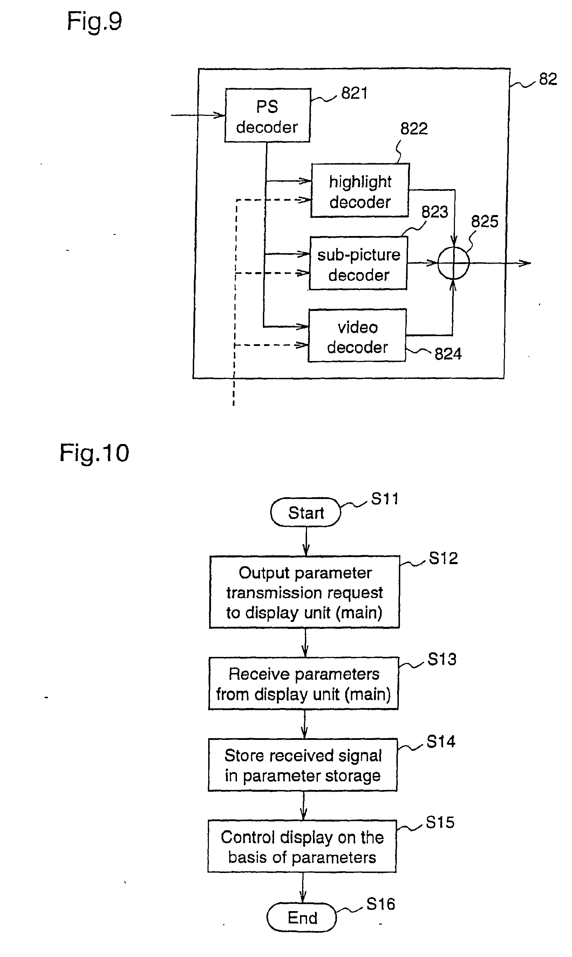

Figure 9 is a flowchart for explaining the operation of a sub display unit in the disc playback system according to the fourth embodiment.

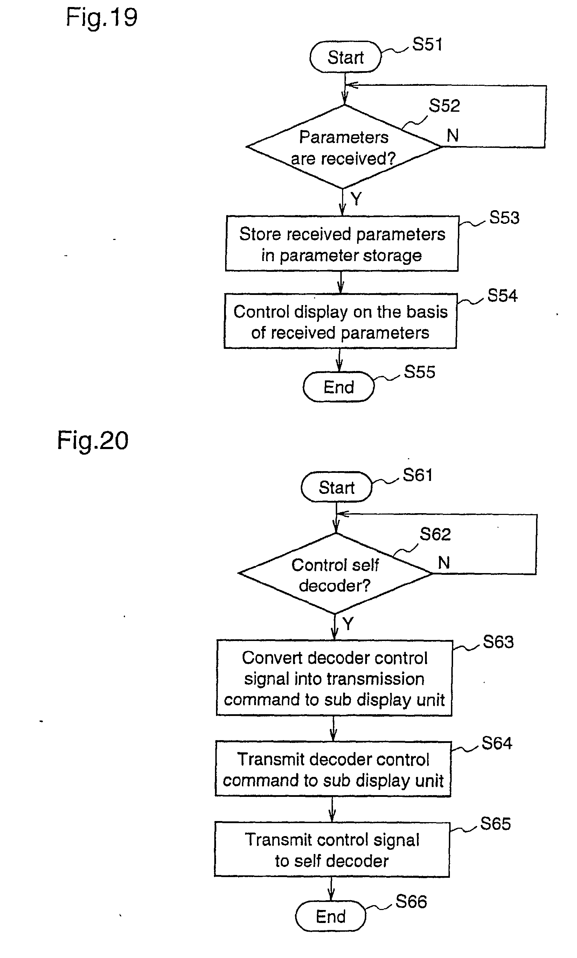

Figure 20 is a flowchart for explaining the operation of a main display unit in the disc playback system according to the fourth embodiment.

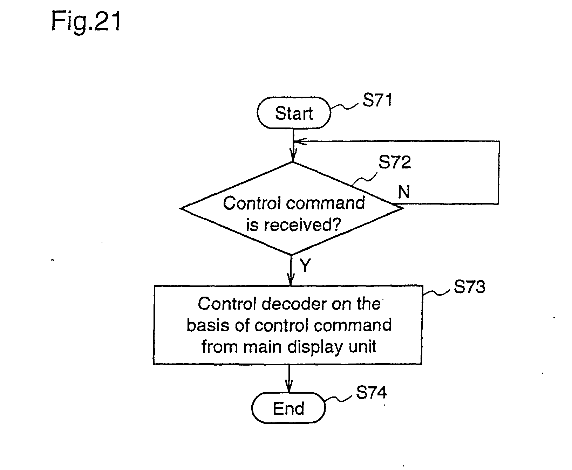

Figure 21 is a flowchart for explaining the operation of a sub display unit in a disc playback system according to a fifth embodiment of the present invention.

### [Embodiment 1]

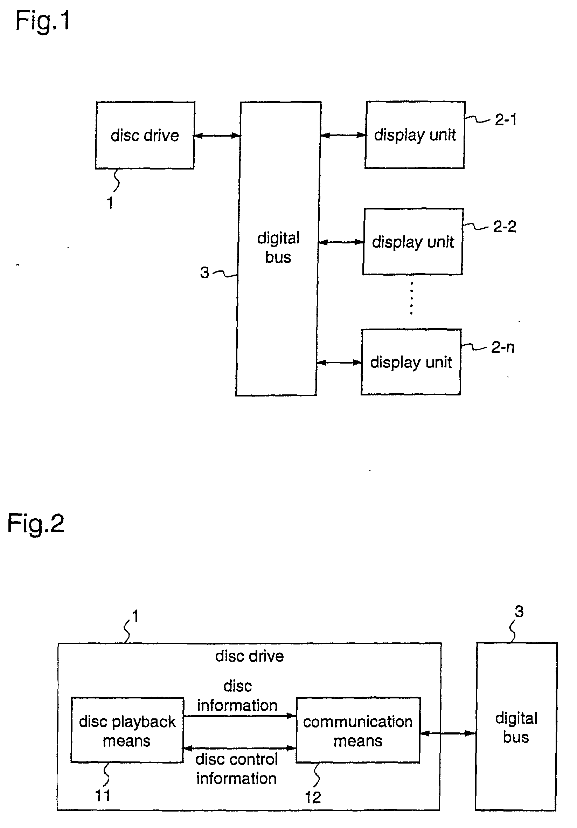

Figure 1 is a block diagram illustrating a disc playback system according to a first embodiment of the present invention. In figure 1, reference numeral 1 denotes a disc drive for reading and outputting a coded signal (MPEC program stream) which is recorded on a disc such as a DVD, a Video-CD, or the like, and reference numerals 2-1∼2-n denote display units for decoding and displaying the coded signal read by the disc drive 1. The display unit 2-1 is a main display unit which starts up first among the plural display units, and the display units 2-2∼2 n are sub display units which start up after the startup of the main display unit. Further, reference numeral 3 denotes a digital bus to which the disc drive 1 and the display units 2-1∼ 2-n are connected.

As for the digital bus 3 according to the first embodiment, an arbitrary digital bus having synchronous channels which can reserve frequency bands for data transmission may be employed. As an example of such digital bus, there is a system called MOST (Media Oriented System Transport) (refer to MOST Specification, www.mostcooperation.com).

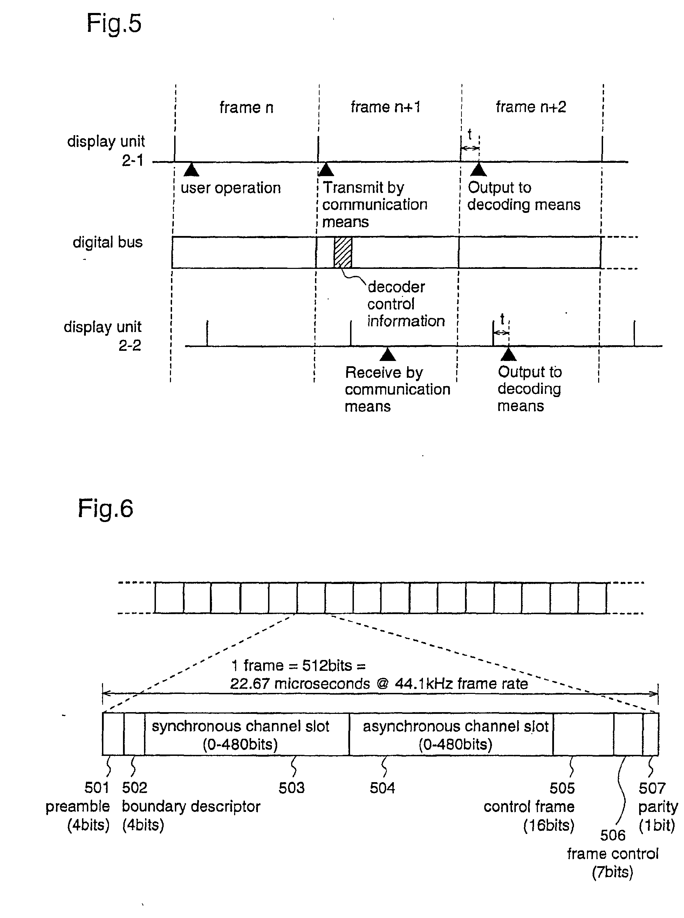

Figure 6 is a diagram illustrating a data structure in a frame included in transmission data according Lo the MOST system. Tn the MOST system, data are transmitted frame by frame such that one frame is transmitted every 44.1kHz, i.e., 22.67 microseconds. The frame frequency of the MOST system is not restricted to 44.1kHz, and a different frequency such as 48kHz may be selected. The data length per frame is 512 bits. As shown in figure 6, each frame is composed of a preamble 501, a boundary descriptor 502, a synchronous channel region 503, an asynchronous channel region 504, a control frame 505, frame control data 506, and a parity 507. In this first embodiment, the preamble 501, the boundary descriptor 502, and the synchronous channel region 503 will be described later, while the asynchronous channel region 504, the control frame 505, the frame control data 506, and the parity 507, which have no direct bearing on the present invention, will not be described.

The preamble 501 is 4-bit data having a predetermined pattern, and it is used for detecting a frame boundary, by a transmitter and a receiver performing data transter. The boundary descriptor 502 is 4-bit data, and it indicates how many pieces of 4-byte block data constitute the synchronous channel region 503. The boundary descriptor 502 is used for indicating a boundary between the synchronous channel region 503 and the a synchronous channel region 504.

The synchronous channel region 503 is data having a length of 0~480 bits, and the length depends on the boundary descriptor 502. The synchronous channel region 503 is used for transferring real-time data such as audio data. The real-time data are data in which each datum has a timing constraint, and it is required that a transmission delay can be defined in its transmission. Further, each byte in the synchronous channel region 503 is assigned as a time slot to the transmitter and the receiver, that is, a maximum of sixty time slots can be used as synchronous channels. Each of the transmitter and the receiver is previously assigned with time slots to be used for data transmission, and a set of time slots to be used for one transmission is defined as a logical channel. The transmitter transmits data using the assigned time slots, and the receiver receives data of the assigned time slots. In the MOST system, using one time slot is equivalent to transmitting data at a rate of 352.8kbps (when the frame frequency is 44.1kHz). That is, in order to transmit data on a CD (Compact Disc) having a transmission rate of 1.4112Mbps, four time slots of the synchronous channel region 503 may be used.

Figure 2 is a block diagram illustrating an example of the disc drive 1. In figure 2, reference numeral 11 denotes a disc playback means, and 12 denotes a communication means. The communication means 12 is a device for receiving or transmitting data using the synchronous channel of the digital bus 3. In figure 2, the communication means 12 transmits disc information outputted from the disc playback means 11 to at least one of the display units 2, and transmits/receives disc playback control information to/from at least one of the display units 2. The disc playback means 11 is controlled by the disc control information, and reads and outputs disc information recorded on discs such as optical discs typified by DVD-Video, DVD-Audio, and Video-CD, or magnetic disks typified by FD, or hard disks. The media from which the disc playback means 11 reads information are not restricted to discs, and the disc playback means 11 can be employed for reading data from arbitrary random-accessible media, for example, memories such as RAM, ROM, Flash, and the like. In the following description, it is assumed that the disc playback means 11 reads data from a DVD-Video.

The disc control information is composed of a set of arbitrary commands for controlling the disc reading process, and includes at least a command which instructs reading of data (hereinafter referred to as a read command). Although the read command usually has arguments which indicale addresses of a read start position and a read end position, the read command is not restricted thereto. The read command may have no indication of a read start position. in this case, reading is started from a head address or a current playback position, or from a predetermined address. Further, the read command may have no indication of a read end position. In this case, reading is continued until a stop command is inputted or until reaching the last address of the disc.

Other commands serving as the disc control information are as follows: a stop command instructing to stop the reading process; a pause command instructing to pause the reading process and stand-by at the current address; a tray command instructing to open or close the disc tray; and a status command for obtaining the disc type or the status of the disc playback system (being played back, being temporarily stopped, presence/absence of disc, condition of the tray, etc.). Of course, the commands serving as the disc control information are not restricted to those mentioned above, and each of these commands may be constituted by plural commands. That is, the disc control information may be composed of arbitrary commands for controlling the disc playback means. Further, the disc control information may include commands instructing data writing as well as the commands instructing data reading.

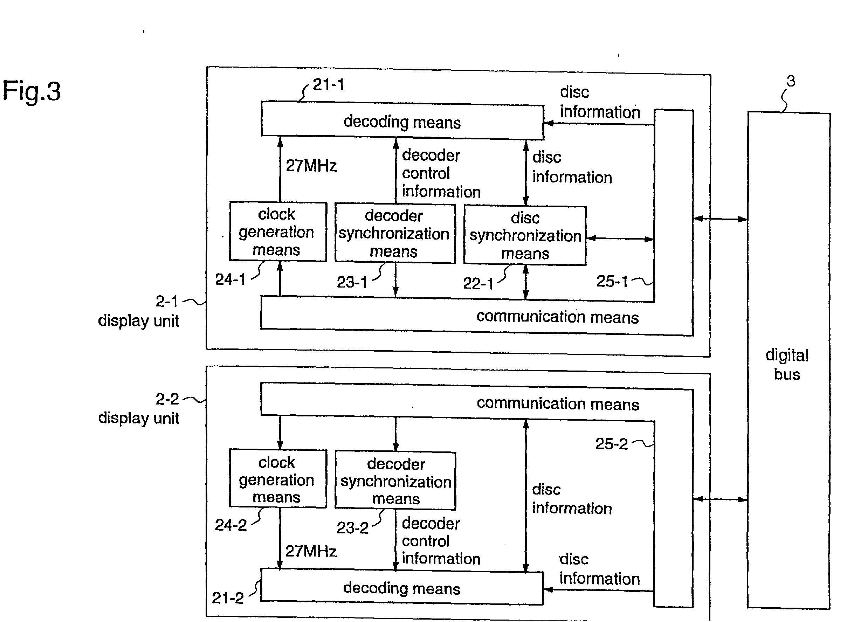

Figure 3 is a block diagram illustrating the structures of the main display unit 2-1 and the sub display unit 2-2. The main display unit 2-1 is composed of a decoding means 21-1, a disc synchronization means 22 1, a decoder synchronization means 23-1, a clock generation means 24-1, and a communication means 25-1. The sub display unit 2-2 is composed of a decoding means 21-2, a decoder synchronization means 23-2, a clock generation means 24-2, and a communication means 25-2.

Hereinafter, the operation of the DVD display unit 2 will be described with reference to figure 3. Although a single sub display unit (2-2) is shown in figure 3, plural sub display units (2-3~2-n) may be connected to the digital bus 3 as shown in figure 1. In this case, the additional sub display units are identical in structure and operation to the sub display unit 2-2.

Initially, the operation of the decoding means 21 included in the main display unit 2-1 and the sub display unit 2-2 will be described. The decoding means 21 decodes coded data of inputted disc information under control of the decoder control information, and outputs a video signal and an audio signal which are decoding results. The decoding means 21 is composed of a combination of hardware and CPU software, or hardware alone, or CPU alone. In the case of a DVD-Video, the coded data is an MPEG-PS (MPEG program stream), and the decoding means 21 includes an MPEG decoder for decoding the MPEG-PS. The video signal outputted from the decoder is displayed as pictures on a CRT or a liquid-crystal display, while the audio signal outputted from the decoder is reproduced as sounds from an amplifier, a speaker, or a headphone. Further, when the decoding means 21 performs decoding, it controls the reading from the disc on the basis of the above-mentioned disc control information. The decoding means 21 obtains the address of disc information to be road from the disc, on the basis of the commands in the decoder control informtion as well as the commands and address information included in the disc information, and outputs at least a read command which instructs reading of the disc information from the address.

The decoder control information is composed of commands for controlling the docoding operation. For example, the decoder control information is composed of commands as follows: "PLAY" instructing to perform playback; trick-play commands such as "FF" (fast-forward), "REW" (fast-rewind), "SLOW" (slow motion), and the like; "SEARCH" instructing to search for scene or time; "STOP" instructing to stop the playback; "PAUSE" instructing to pause the playback; a command for setting playback mode or the like; a command for selecting menu or title; and the like. Of course, the commands serving as the decoder control information are not restricted to those mentioned above, and the decoder control information may be composed of arbitrary commands for controlling the decoding operation.

The communication means 25 is a unit for receiving or transmitting data using the synchronous channel of the digital bus, and it receives the disc information outputted from the disc playback means 11. Further, the communication means 25-1 in the main display unit 2-1 transmits the disc control information to the disc playback means 11.

Even when performing a multiple display (a function of displaying the same picture on multiple display units 2 simultaneously), the same operation as mentioned above is carried out.

Next, the operation of the disc playback system for realizing multiple display will be described.

The disc playback system according to the first embodiment realizes multiple display according to three processes as follows: (1) process of synchronizing disc control information, (2) process of synchronizing decoder control information, (3) process of synchronizing clock. Hereinafter, the respective processes will be described.

### (1) Process of Synchronizing Disc Control Information

Initially, Lhe operation of the sub display unit 2-2 will be described. The sub display unit 2-2 transfers the disc control information which is outputted from the decoding means 21-2, through the communication means 25-2 and the digital bus 3, to the main display unit 2-1.

Next, the operation of the main display unit 2-1 will be described. The disc synchronization means 22-1 in the main display unit 2-1 receives the disc control information outputted from the decoding means 21-1, and the disc control information outputted from the display unit 2-2 and received by the communication means 25-1, and outputs the disc control information to the disc drive 1 through the communication means 25-1. Among the commands included in the received disc control information, at least with respect to the command instructing to read the disc information recorded on the disc, such as the read command, the disc synchronization means 22-1 receives the same command from all of the display units 2 and, thereafter, outputs one command as the disc control information. As an example of a command, other than the read command, instructing to read the disc information recorded on the disc, there is a read DMA command which instructs reading of data using DMA transfer. Further, those commands other than the command instructing to read the disc information recorded on the disc (i.e., stop command, pause command, tray command, status command, etc.) can be processed in the same way as described above.

Further, the above-mentioned synchronizing process may be performed on all of the commands which are commonly outputted from the respective display units 2, and return values of the disc control information from the disc drive 1 (e.g., ACK/NACK, return value of status command, and the like) may be directly inputted to all of the display units 2.

After all of the decoding means 21 of the display units 2 go into the states of receiving the disc information, the disc information is inputted. Thereby, the decoding means 21 of the respective display units can correctly decode the disc information, and all of the display units performing display operations can display the same picture at the same time.

### (2) Process of Synchronizing Decoder Control Information

The decoder synchronization means 23-1 of the display unit 2-1 generates decoder control information according to user operation or the like, and transmits it through the communication means 25-1 to the display unit 2-2. Thereafter, the decoder synchronization means 23-1 outputs the decoder control information to the decoding means 21-1. Further, the decoder synchronization means 23-2 of the display unit 2-2 receives the decoder control information from the display unit 2-1 and, thereafter, outputs the decoder control information to the decoding means 21-2. The communication means 25 transfers the decoder control information through the synchronous channel.

Further, the communication means 25 generates a periodic signal of a predetermined cycle. Preferably, this periodic signal is a signal having the frame frequency of the digital bus (in the case of MOST, 44.1kHz or 48kHz). However, the periodic signal is not restricted thereto, and an arbitrary periodic signal may be employed as long as the temporal relationship between the signal and the data to be transferred through the synchronous channel is always constant. For example, the periodic signal may be a signal which is generated on the basis of an arbitrary timing signal that is generated at predetermined intervals by the main display unit 2-1, or the sub display unit 2-2, or an arbitrary unit, and transmitted through the synchronous channel.

Figure 5 is a diagram for explaining the operations of the decoder synchronous means 22-1 and 22-2 in the display units 2-1 and 2-2, respectively. The decoder synchronous means 23-1 outputs the decoder control information to the decoding means 21-1 when t seconds have passed from the periodic signal which was outputted after the decoder synchronous means 23-1 outputted the same decoder control information to the communication means 25-1. Further, the decoder synchronization means 23-2 outputs the decoder control information inputted to the decoding means 21-1 when t seconds have passed from the periodic signal which was outputted after the decoder synchronization means 23-2 received the decoder control information from the communication means 25-2.

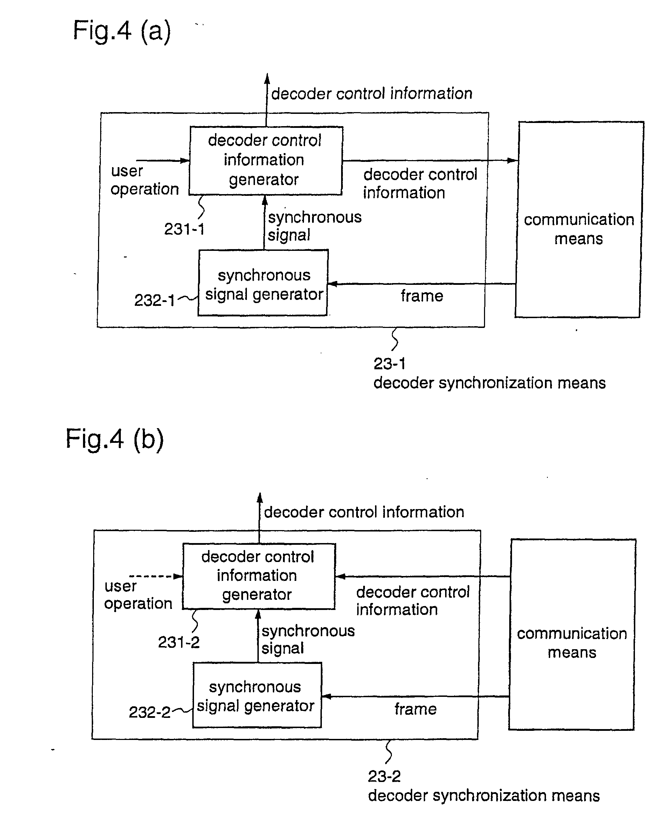

Figures 4(a) and 4(b) are block diagrams illustrating examples of the decoder synchronization means 23-1 and 23-2 which perform the above-mentioned operations. In the decoder synchronization means 23-1, a decoder control information generator 231-1 generates decoder control information on the basis of user operation, and outputs it to the communication means. Further, the decoder control information generator 231-1 outputs the decoder control information to the decoding means 21-1 after t seconds (t: arbitrary integer) have passed from when the n-th periodic signal (n: arbitrary natural number) was outputted. A synchronous signal generator 232-1 is means for generating a periodic signal from the information outputted from the communication means, and this means may be dispensed with when the communication means directly outputs the periodic signal. In the decoder synchronization means 23-2, a decoder control information receiver 231-2 receives the decoder control information from the communication means, and outputs the decoder control information to the decoding means 21-2 after t seconds (t: arbitrary integer) have passed from when the n-th periodic signal (n: arbitrary natural number) was outputted. A synchronous signal generator 232-2 is means for generating a periodic signal from the information outputted from the communication means, and this means may be dispensed with when the Communication means directly outputs the periodic signal.

According to the above-described process of synchronizing the decoder control information, in the respective display units 2, the respective decoder control information are inputted to the decoding means after equal periods have passed from occurrences of the periodic signals. In the respective display units 2, the relationships in phases between the periodic signal and the data transferred through the synchronous channel are the same. Further, the disc information is transferred through the synchronous channel. Accordingly, the temporal relationship between the disc information and the decoder control information, which are inputted to the decoding means, is always constant, whereby all of the display units performing display operations can display the same picture at the same time.

When the temporal relationship between the disc information and the decoder control information deviates, there is a possibility that pictures of different frames may be displayed when a pause command is issued, or jumping of pictures to different chapters or scenes may occur when a skip command (a command for jumping to the next chapter or scene) is issued. In this first embodiment of the invention, however, since all of the display units performing display operations can display the same picture at the same time, such synchronization errors as described above can be avoided.

### (3) Process of Synchronizing Clock

The clock generation means 24-1 and 24-2 generate 27MHz, which is an operation clock of DVD-Video, in synchronization with a network clock outputted from the communication means 25-1. Thereby, the operation clocks inputted to the decoding means 21 of the respective display units 2 have the same frequency (27MHz).

When the frequencies (27MHz) in the respective decoding means 21-1 and 21-2 differ even a little, the amounts of data consumption from the buffers in the respective decoding means differ. This causes a possibility that underflow or overflow of data might occur in the display unit 2 2. In this first embodiment, however, since the frequencies (27MHz) in the respective decoding means 21-1 and 21-2 can be made exactly the same, the above-mentioned problem of underflow or overflow is avoided.

As described above, in the disc playback system according to the first embodiment, the disc information is correctly decoded by the process of synchronizing the disc control information, the temporal relationship between the disc information and the decoder control information to be inputted to the decoding means is always constant by the process of synchronizing the decoder control information, and underflow and overflow of data are avoided by the clock synchronizing process. Therefore, multiple display is realized, i.e., all of the display units performing display operations can display the same picture at the same time.

While in this first embodiment the display units 2 have the structures shown in figure 3 to realize (1) process of synchronizing disc control information, (2) process of synchronizing decoder control information, and (3) process of synchronizing clock, the structures of the display units 2 are not restricted thereto. The display units can be implemented with arbitrary structures that realize the respective synchronizing processes, with the same effects as described above.

Furthermore, although it is desirable that each display unit 2 can perform all of the three synchronizing processes, the present invention is not restricted thereto. The display unit may be constructed so as to perform one of the three synchronizing processes, with the effect of the corresponding synchronizing process. That is, when performing the process of synchronizing the disc control information, since the decoding means of the respective display units can correctly decode the disc information, all of the display units performing display operations can display the same picture at the same time. When performing the process of synchronizing the decoder control information, since the temporal relationship between the disc information and the decoder control information to be inputted to the decoding means is always constant, all of the display units performing display operations can display the same picture at the same time. Further, when performing the clock synchronizing process, since underflow and overflow of data are avoided in all of the display units, all of the display units performing display operations can display the same picture at the same time. Further, each display unit may be constructed so as to perform arbitrary two of the three synchronizing processes. in this case, a combination of the effects corresponding to the arbitrary two synchronizing processes to be combined can be obtained.

Furthermore, while in this first embodiment the main display unit 2-1 is provided with the disc synchronization means, the present invention is not restricted thereto. Any of the sub display units 2-2∼2-n may have the disc synchronization means, or the disc drive 1 may have the disc synchronization means, with the same effects as mentioned above. Further, the disc synchronization means may be distributed among the disc drive 1 and the display units 2-1∼2-n, with the same effects as described above.

### [Embodiment 2]

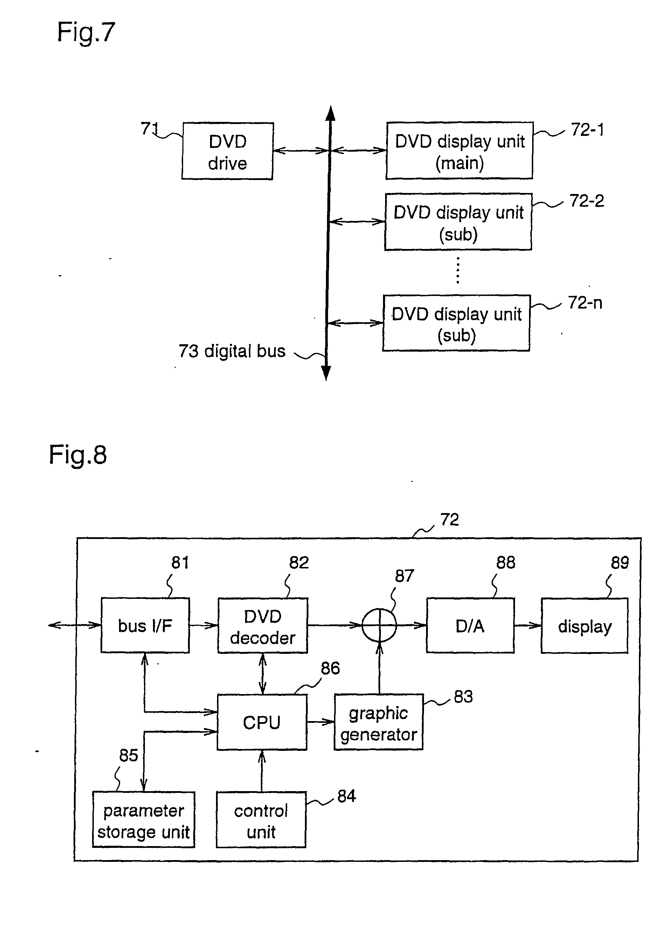

Figure 7 is a block diagram illustrating a disc playback system according to a second embodiment of the present invention. In figure 7, reference numeral 71 denotes a DVD drive for reading and outputting a coded signal (MPEG program stream) recorded on a DVD, and reference numerals 72-1~72-n denote DVD display units for decoding and displaying the MPEG program stream read by the DVD drive 71. The DVD display unit 72-1 is a main display unit which starts up first among the plural display units, and the DVD display units 72-2~72-n are sub display units which start up after the startup of the main display unit. Reference numeral 73 denotes a digital bus to which the DVD drive 71 and the DVD display units 72-1~72-n are connected. As in the first embodiment, the digital bus 73 may be an arbitrary digital bus having synchronous channels which can reserve frequency bands for data transmission.

Figure 8 is a block diagram illustrating the structure of each DVD display unit 72. In figure 8, 81 denotes a bus interface (I/F) for performing transmission and reception of signals through the digital bus 73; 82 denotes a DVD decoder for decoding the MPEG program stream recorded on the DVD, and outputting a digital video signal; and 83 denotes a graphic generator for generating a graphic signal on the basis of a control from a CPU 86, and outputting the graphic signal. Further, 84 denotes an operation unit for outputting a user operation input as a command signal; 85 denotes a parameter storage unit for holding set values of the display units 72, parameters included in the stream transmitted from the DVD drive 71, and the like; and 86 denotes a CPU for performing control of the DVD decoder 82, control of the graphic generator 83, and read/write or alteration of the parameters stored in the parameter stqrage unit 85. Furthermore, 87 denotes a compositor for overlaying the graphic signal on the digital video signal; 88 denotes a D/A converter for converting the digital video signal into an analog video signal; and 89 denotes a display for displaying DVD pictures and graphics (OSD menu).

Figure 9 is a block diagram illustrating the structure of the DVD decoder 82. In figure 9, 821 denotes a PS decoder for decoding the MPEC program stream; and 822 denotes a highlight decoder for decoding highlight data for DVD menu screen (graphic data of a selected button, i.e., position, color, etc.), which highlight data arc multiplexed into the MPEG program stream, and outputting a graphic signal. Further, the highlight decoder 822 changes the highlight position on the basis of a command signal from the operation unit 84. Furthermore, 823 denotes a sub-picture decoder for decoding sub-picture data which are multiplexed into the MPEG program stream, and outputting a graphic signal; 824 denotes a video decoder for decoding the MPEG video stream, and outputting a digital video signal; and 825 denotes a compositor for overlaying the graphic signal on the digital video signal. The CPU 26 outputs the command signal supplied from the operation unit 84, to the highlight decoder 822, and reads the position of a button which is currently highlighted. Further, the CPU 26 performs display ON/OFF control and designation of display language, on the sub-picture decoder 823. Furthermore, the CPU 26 performs setting and readout of parameters such as a trick play mode, on/from the video decoder 824.

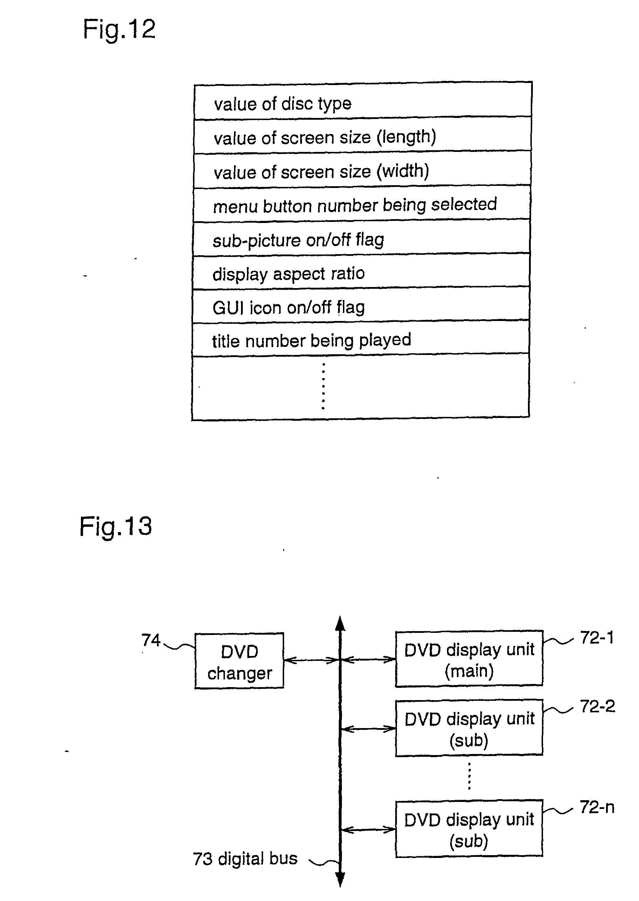

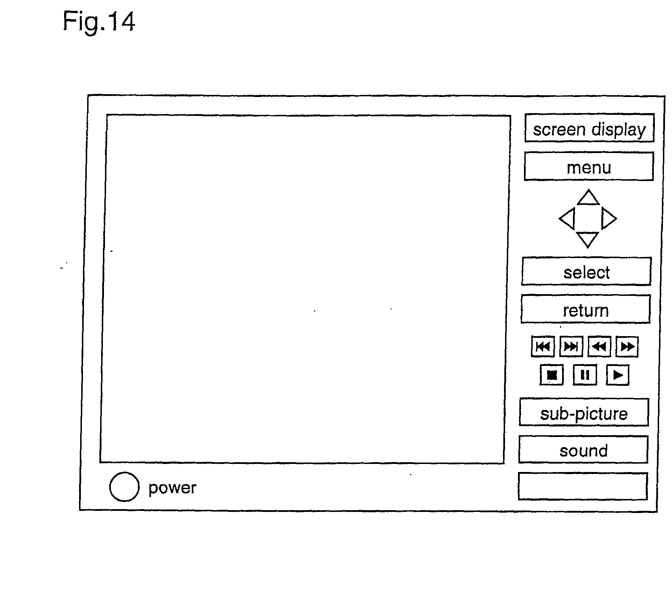

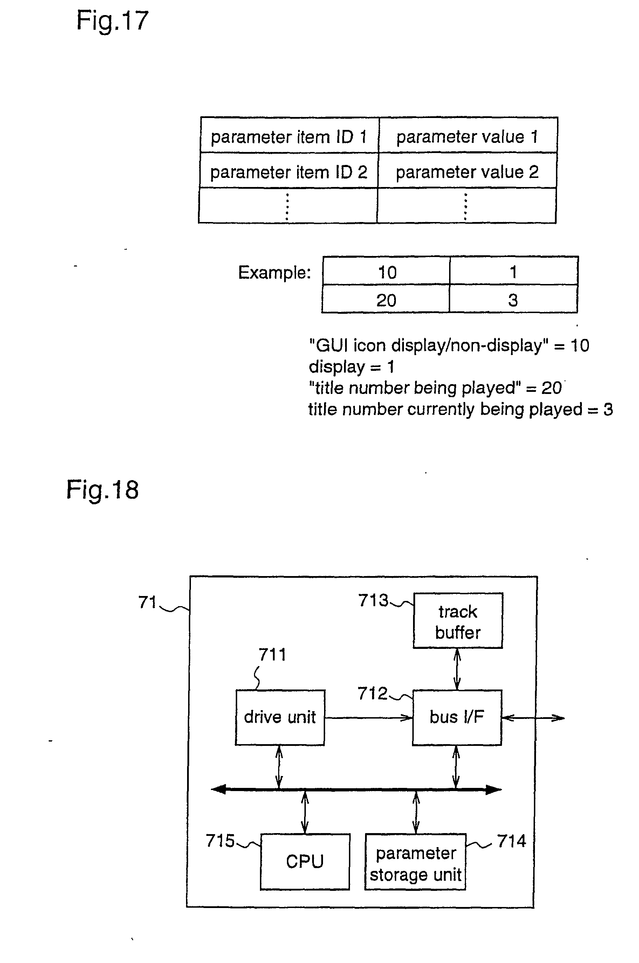

Next, the operation of the disc playback system according to the second embodiment will be described. In this second embodiment, a DVD display unit which starts up first among the plural DVD display units becomes the main display unit 72-1, and DVD display units which start up after the startup of the main display unit become the sub display units 72-2∼72-n. Initially, Lhe display unit which has started up first among the plural display units 72 receives static parameters recorded on the disc from the DVD drive 71, and displays a menu screen. Figure 14 is a diagram illustrating an example of the appearance of the display unit. The user performs inputting of operation using an operation key provided on the display unit while viewing the menu display on the display unit. The operation unit 84 outputs the user operation as a command signal to the CPU 86, and the CPU 86 controls the respective parts in the display unit according to the command signal from the operation unit 84. Thereby, the display unit starts playback and display according to the user operation. The static parameters received from the DVD drive 71 and the dynamic parameters which are set by user operation or the like are stored in a predetermined format in the parameter storage unit 85. Figure 12 is a diagram illustrating an example of a format of parameter data stored in the parameter storage unit 85. In figure 12, the values of parameters are successively stored, in predetermined order of items, in a storage area of the parameter storage unit 85. The parameter data format is not restricted to that shown in figure 12. As shown in figure 17, the parameter items may be expressed with predetermined ID numbers, and the parameter values as well as the parameter item IDS may be successively stored in the storage area of the parameter storage unit 85.

Next, a description will be given of the operation when a sub display unit starts up while the main display unit is performing display operation. Figure 10 is a flowchart for explaining the operation of the sub display unit in the disc playback system according to the second embodiment.

When the sub display unit starts up (step S11), it transmits a startup notification signal through the digital bus to the main display unit 72-1, thereby making a parameter transfer request (step S12). Then, the sub display unit receives, through the digital bus 73, the parameters which are transmitted from the main display unit 72-1 in response to the parameter transfer request and are required for display of the same picture as the main display unit 72-1 (step S13), and stores the received parameters in the parameter storage unit 85 of the self unit (step S14). The CPU 86 of the activated sub display unit controls the respoctive parts of the display unit, on the basis of the parameters which are received from the main display unit 72-1 and stored in the parameter storage unit 85 (step S15). Thereby, the sub display unit starts display on the basis of the same parameters as the parameters the main display unit 72-1 uses for playback operation.

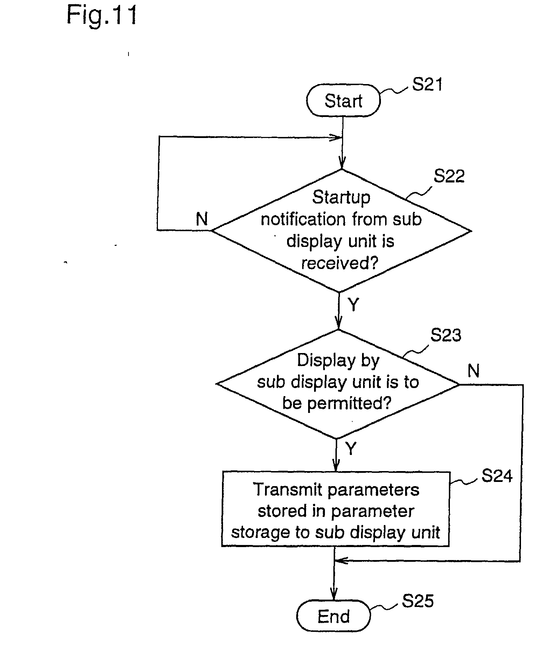

Figure 11 is a flowchart for explaining the operation of the main display unit 72-1 when the sub display unit starts up. On receipt of the startup notification (parameter transfer request) from the sub display unit through the digital bus (step S22), the main display unit 72-1 decides whether playback and display by the sub display unit should be permitted or not, on the basis of copyright information or the like included in the disc being played back (step S23). When playback and display by the sub display unit are permitted, the main display unit 72-1 transmits the parameters stored in the parameter storage unit 85 to the sub display unit which has issued the startup notification (parameter transfer request) (step S24).

Examples of static parameters recorded on the disc are as follows: aspect ratio of original picture, permitted display mode on 4:3 monitor, disc type, disc title, list of parental levels associated with IDs, parental level of title or PGC, display sub-picture language or list of stream numbers associated with display sub-picture languages, video attributes such as compression mode, resolution, etc., audio attributes such as coding mode, sampling rate, etc., playback audio language or list of stream numbers associated with playback audio languages, sub-picture, PCI.

Examples of dynamic parameters as the set values relating to the operation of the player are as follows: highlighted button number of menu, menu description language code, sub-picture on/off flag, sub-picture stream number, display aspect ratio, current display mode, title number being played back, part of title number being played back, title PGC number being played back, VTS title number being played hack, angle number, audio stream number, karaoke mixing mode, current playback contents (video/menu), current trick play mode (fast-forward or the like), OSD menu display/non-display, OSD menu display screen mode, OSD menu language, elapsed playback time, parameters of unit-specific functions (point A and point B (starting poinL and end point) specified/unspecified, repeat playback ON/OFF, etc.).

When the sub display unit does not share, with the main display unit, "aspect ratio of original picture" or "permitted display mode on 4:3 monitor" among the above-mentioned static parameters, the video display on the sub display unit does not match the video display on the main display unit. In the disc playback system according to the second embodiment, however, since the sub display unit shares the parameters with the main display unit by the above-described operation, the video display on the sub display unit matches the video display on the main display unit. Further, when the sub display unit does not share "disc type" with the main display unit, the sub display unit might not be able to play the disc. In the disc playback system according to the second embodiment, however, since the sub display unit shares the parameters with the main display unit, the sub display unit can normally play the disc. When the sub display unit does not share "disc title" with the main display unit, the sub display unit cannot display the title list when a DVD changer 74 is used as a DVD drive. In the disc playback system according to the second embodiment, however, since the sub display unit shares the parameters with the main display unit, the sub display unit can display the same title list as that displayed by the main display unit. Further, when the sub display unit does not share "list of parental levels associated with IDs" or "parental level of title or PGC" with the main display unit, the same video display is performed on all of the display units. In the disc playback system according to the second embodiment, however, since the sub display unit shares the parameters with the main display unit, display control according to the parental level can be performed for each display unit. When the sub display unit does not share "display sub-picture language, or list of stream numbers associated with display sub-picture languages", "video attributes such as compression mode, resolution, etc.", "audio attributes such as coding mode, sampling rate, etc.", or "playback audio language, or list of stream numbers associated with playback audio languages" with the main display unit, the display of the OSD menu on the sub display unit does not matchthe display of the OSD menu on the main display unit. In the disc playback system according to the second embodiment, however, since the sub display unit shares the parameters with the main display unit by the above-mentioned operation, the video display on the sub display unit matches the OSD menu display on the main display unit. In the above description, "OSD menu" means a menu of functions of each display unit, such as display of title number, display of sub-picture language, etc.

When the sub display unit does not share "sub-picture" or "PCI" with the main display unit, the display of the DVD menu on the sub display unit does riot match the display (video) of the DVD menu on the main display unit. In the disc playback system according to the second embodiment, however, since the sub display unit shares the parameters with the main display unit by the above-mentioned operation, the video display on the sub display unit matches the display (video) of the DVD menu on the main display unit. In the above description, "DVD menu" is a menu recorded on the DVD, such as selection of title, and the like.

Furthermore, when the sub display unit does not share, with the main disp lay unit, "highlighted button number of menu" among the above-mentioned dynamic parameters, the display of the DVD menu on the sub display unit (positions of option buttons) does not match the display on the main display unit. In the disc playback system according to the second embodiment, however, since the sub display unit shares the parameters with the main display unit by the above-mentioned operation, the video display on the sub display unit matches the display of the DVD menu (positions of option buttons) on the main display unit. Further, when the sub display unit does not share "menu description language code" with the main display unit, the display of the DVD menu (language) on the sub display unit does not match the display on the main display unit. In the disc playback system according to the second embodiment, however, since the sub display unit shares the parameters with the main display unit by the above-mentioned operation, the video display on the sub display unit matches the display of the DVD menu (language) on the main display unit. Furthermore, when the sub display unit does not share "sub-picture on/off flag" with the main display unit, the sub-picture display/non-display on the sub display unit might not match the sub-picture display/non-display on the main display unit. In the disc playback system according to the second embodiment, however, since the sub display unit shares the parameters with the main display unit by the above-mentioned operation, the video display on the sub display unit matches the sub-picture display/non-display on the main display unit. When the sub display unit does not share "sub-picture stream number" with the main display unit, the display of the sub picture (language) on the sub display unit might not match the display of the sub-picture (language) on the main display unit. In the disc playback system according to the second embodiment, however, since the sub display unit shares the parameters with the main display unit by the above-mentioned operation, the video display on the sub display unit matches the display of the sub-picture (language) on the main display unit. When the sub display unit does not share "display aspect ratio" or "current display mode" with the main display unit, the video display and the sub-picture display (position) on the sub display unit might not match the video display and the sub-picture display (position) on the main display unit. In the disc playback system according to the second embodiment, however, since the sub display unit shares the parameters with the main display unit by the above-mentioned operation, the video display on the sub display unit matches the video display and the sub-picture display (position) on the main display unit. When the sub display unit does not share, with the main display unit, "title number being played", "part of title number being played", "title PGC number being played", "VTS title number being played", "angle number", "audio stream number", "karaoke mixing mode", "OSD menu display/non-display", "OSD menu display screen mode", "OSD menu language", "clapsed playback time", or "parameters of unit-specified functions", the display of the OSD menu on the sub display unit does not match the display of the OSD menu on the main display unit. In the disc playback system according to the second embodiment, however, since the sub display unit shares the parameters with the main display unit by the above-mentioned operation, the video display on the sub display unit matches the OSD menu display on the main display unit. When the sub display unit does not share "current playback contents (video/menu) " or "current trick-play mode (fast-forward or the like)" with the main display unit, the video display and decoder operation of the sub display unit do not match the video display and decoder operation of the main display unit. In the disc playback system according to the second embodiment, however, since the sub display unit shares the parameters with the main display unit by the above-mentioned operation, the video display and decoder operation of the sub display unit match those of the main display unit.

As described above, according to the second embodiment of the invention in the disc playback system which is provided with the plural display units each having a coded signal decoding function, when one of the plural display units starts up while another display unit is performing playback and display operation, the display unit performing playback and display operation transmits the parameters used for the playback and display to the display unit which has just started up, and the display unit which has just started up performs playback and display operation on the basis of the parameters received. Therefore, all of the display units performing display operations can display the same picture at the same time.

Furthermore, resume data of the disc playback system may be employed as the parameters described for the second embodiment. The resume data are parameters to be continuously stored in the disc playback system for a predetermined period of time even after the power to the system is turned off, to realize the resume function of the disc playback system. As an example of resume function, there is a function of resuming playback from the position of a picture at which the power to the disc playback system has been turned off, when the power is turned on again. As an example of resume data for implementing this function, there is a sector address of the disc, which has been read just before the power-off, or a status of the decoder just before the power-off. In this way, by transmitting the resume data from the main display unit to the sub display unit when the sub display unit starts up later, the display unit having the resume function can be easily applied to the display playback system having plural display units.

The parameters described for the second embodiment are merely examples, and the present invention is not restricted thereto.

### [Embodiment 3]

A disc playback system according to a third embodiment of the present invention is, like the disc playback system according to the second embodiment, provided with plural display units each having a coded signal decoding function and, when one of the plural display units starts up while another display unit is performing playback and display operation, the display unit performing playback and display operation transmits parameters which are used for the playback and display operation to the display unit which has just started up, and the display unit which has started up performs playback and display operation on the basis of the parameters received. Further, in this third embodiment, when there is an operation input to any of the plural display units while all of the display units performing display operations display the same picture at the same time, the operation input is reflected in the display operations of all the display units performing display operation. Since the fundamental structure of the disc playback system according to the third embodiment is identical to that of the disc playback system according to the second embodiment, the same reference numerals as those shown in figures 7 and 8, which are used for describing the second embodiment, will be employed hereinafter.

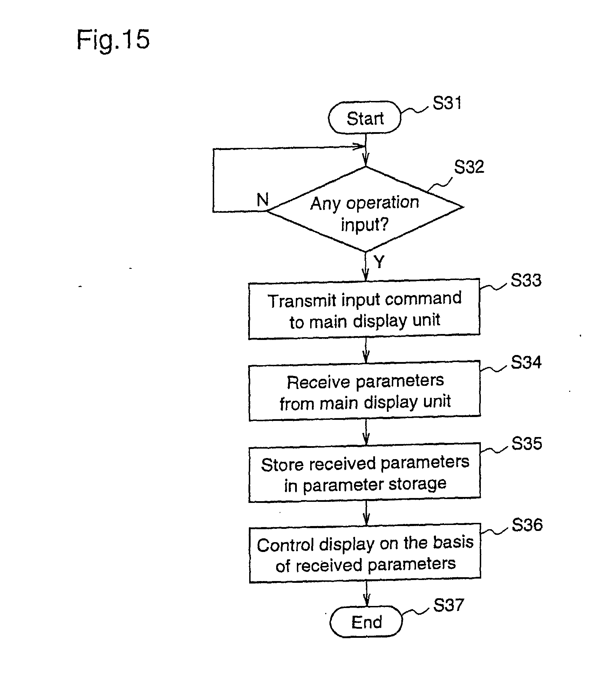

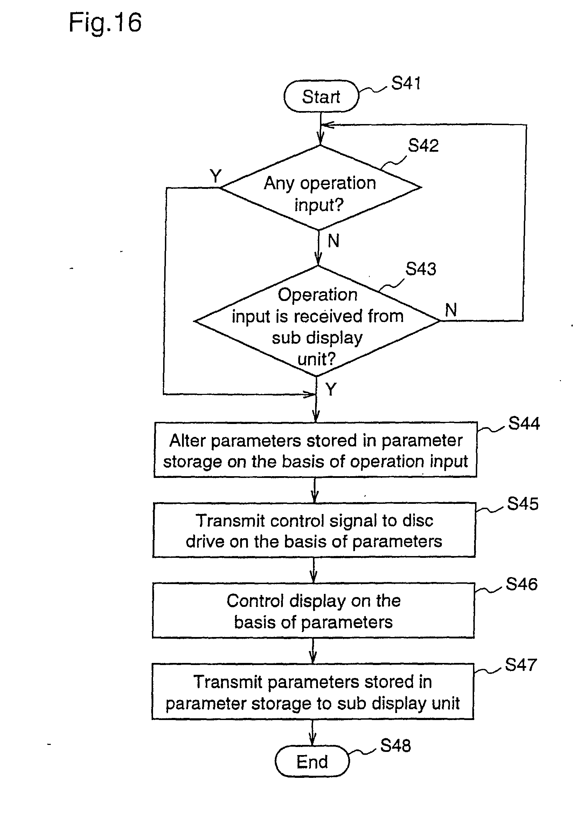

Figure 15 is a flowchart for explaining the operation of the sub display unit when there is an operation input to the sub display unit, in the disc playback system according to the third embodiment, and figure 16 is a flowchart for explaining the operation of the main display unit when there is an operation input to the main display unit, in the disc playback system according to the third embodiment.

With reference to figure 16, when there is an operation input to the main display unit (step S42), the CPU 86 of the main display unit alters the parameters stored in the parameter storage unit 85 on the basis of a control command signal supplied from the operation unit 84 (step S44), and transmits a control signal to the disc drive 71 through the digital bus 73 on the basis of the altered parameters (step S45), and performs display control by controlling the respective parts in the self unit on the basis of the altered parameters (step S46). Further, the CPU 86 transmits the altered parameters stored in the parameter storage unit 85, to all of the sub display units performing display operations, through the digital bus 73 (step S47). Thereby, all of the sub display units performing display operations can share the parameters with the main display unit, which parameters have been altered by the operation input, and the operation input to the main display unit is reflected in the display operations of all the display units.

On the other hand, with reference to figure 15, when there is an operation input to the sub display unit (step S32), the CPU 86 of the sub display unit does not alter the parameters stored in the parameter storage unit 85 on the basis of a control command signal supplied from the operation unit 84, but transmits the control command signal to the main display unit through the digital bus 73 (step S33). On receipt of the control command signal from the sub display unit, the main display unit decides that it has received the operation input from the sub display unit (step S43 in figure 16), and performs the processes in steps S44 to S47, and then transmits the altered parameters to all of the sub display units performing display operations, through the digital bus 73. Each of the sub display units receives the altered parameters transmitted from the main display unit (step S34 in figure 15), and stores the parameters in the parameter storage unit 85 (step S35), and performs display control on the basis of the parameters (step S36). Thereby, all of the sub display units performing display operations can share the parameters with the main display unit, which parameters have been altered by the control command signal according to the operation input to the sub display unit, and the operation input to the sub display unit is reflected in the display operations of all the display units.

As described above, in the disc playback system according to the third embodiment, one of the plural display units controls the disc drive, and any of the other display units transmits a control command signal based on an operation input to the self unit, to the display unit controlling the disc drive. The display unit controlling the disc drive alters the parameters on the basis of the control command signal from the sub display unit, controls the disc drive on the basis of the altered parameters, and controls the playback and display operation on the basis of the altered parameters and, further, transmits the altered parameters to the other display units. Therefore, when there is an operation input to any of the plural display units, the operation input is reflected throughout the display operations of all the display units performing the display operations, whereby all of the display units performing the display operations can display the same picture at the same time.

In the disc playback system according to the third embodiment, the main display unit alters the parameters on the basis of a control command signal supplied from any of the sub display units, controls the disc drive on the basis of the altered parameters, and controls the playback and display operation on the basis of the altered parameters, and further, transmits the altered parameters to all of the sub display units, whereby the operation input is reflected throughout the display operations of all the display units performing display operations. However, the disc playback system may be constructed such that the display unit receiving the operation input alters the parameters possessed by the self unit on the basis of the control command signal, and controls the disc drive as well as the playback and display operation on the basis of the altered parameters, and further, transmits the altered parameters to all of the other display units. Also in this case, as in the disc playback system according to the third embodiment, when an operation input is applied to any of the display units, the operation input is reflected throughout the display operations of all the display units performing the display operations, whereby all of the display units performing the display operations can display the same picture at the same time.

Further, the parameters to be transmitted from the main display unit to the sub display units may include the control command signal which is supplied from the operation unit 84 or the sub display unit to the main display unit. Alternatively, the main display unit may transmit only the control command signal.

### [Embodiment 4]

According to a fourth embodiment of the present invention, the disc drive of the disc playback system according to the second embodiment is provided with a parameter storage unit for holding parameters, and transmission of the parameters to each display unit is performed from the disc drive.

Figure 18 is a block diagram illustrating a disc drive 71 included in the disc playback system according to the fourth embodiment. In figure 18, 711 denotes a drive unit for reading a signal recorded on a DVD disc and outputting it; 712 denotes a bus interface (I/F) for performing transmission/reception of the signal through the digital bus 73; 713 denotes a track buffer for temporarily holding the signal outputted from the drive unit; 714 denotes a parameter storage unit for holding static parameters read from the disc and dynamic parameters transmitted from a display unit; and 715 denotes a CPU for controlling the drive unit 711 and the bus I/F 712, and performing readout and alteration of data stored in the parameter storage unit 714.

Next, the operation of the disc playback system according to the fourth embodiment will be described. A display unit which starts up first among the plural display units 72 receives the static parameters recorded on the disc from the DVD drive 71, and performs menu screen display. The user inputs an operation while viewing the menu display. The operation unit 84 outputs the user's operation input as a command signal to the CPU 86, and the CPU 86 controls the respective parts in the display unit according to the command signal from the operation unit 84. Thereby, the display unit starts playback and display according to the user's operation input. The static parameter supplied from the DVD drive 71 and the dynamic parameters set by the user's operation input or the like are stored in a predetermined format in the parameter storage unit 85. Further, among the parameters stored in the parameter storage unit 85, the dynamic parameters specified by the user's operation input or the like are transmitted from the display unit to the disc drive 71 through the digital bus 73. The disc drive 71 stores the static parameters read from the disc by the drive unit 711 as well as the dynamic parameters supplied from the display unit, in the parameter storage unit 714. When another display unit starts up, the disc drive 71 transmits the parameters stored in the parameter storage unit 714 to this display unit.

Figure 19 is a flowchart for explaining the operations of the display units 72 in the disc playback system according to the fourth embodiment.

When one of the display units 72 starts up (step S51), it waits for parameters to be transmitted from the disc drive 71 (step S52). When the display unit 72 receives the parameters transmitted from the disc drive 71, it stores the parameters in the parameter storage unit 85 of the self unit (step S53). The CPU 86 of the display unit 72 which has started up controls the respective parts in the display unit on the basis of the parameters which are supplied from the disc drive 71 and stored in the parameter storage unit 85 (step S54). Thereby, the display unit 72 starts display on the basis of the same parameters as those used for the playback and display operation of the display unit which is already performing playback and display operation.

As described above, according to the fourth embodiment of the present invention, in the disc playback system provided with plural display units each having a coded signal decoding function, the disc drive is provided with the parameter storage unit for holding the parameters which are used by the display unit performing playback and display operation, and transmits the parameters used by the display unit performing playback and display operation to a display unit which has started up later so that the display unit can perform playback and display operation on the basis of the parameters received. Therefore, all of the display units performing display operations can display the same picture at the same time.

In the disc playback system according to the fourth embodiment, the disc drive transmits the parameters stored in the parameter storage unit. However, when transmitting the static parameters, the disc drive may read the static parameters from the disc and transmit the read parameters, instead of the parameters stored in the parameter storage unit.

### [Embodiment 5]

A disc playback system according to a fifth embodiment of the present invention is, like the disc playback system according to the third embodiment, provided with plural display units each having a coded signal decoding function and, when there is an operation input to any of the display units while all of the display units performing display operations display the same picture at the same time, a main display unit performing playback and display operation transmits parameters used for the playback and display operation to sub display units, whereby the sub display units perform playback and display operations on the basis of the parameters received. In this fifth embodiment, however, a control signal for controlling the decoder of each sub display unit is transmitted as a parameter. Since the fundamental structure of the disc playback system according to the fifth embodiment is identical to that of the disc playback system according to the second embodiment, the same reference numerals as those shown in figures 7 and 8, which are employed for describing the second embodiment, will be employed hereinafter.

Figure 20 is a flowchart for explaining the operation of the main display unit which transmits a control signal to the sub display units in the disc playback system according to the fifth embodiment, and figure 21 is a flowchart for explaining the operation of each sub display unit which receives the control signal from the main display unit.

With reference to figure 20, when the CPU 86 receives a control command signal from the operation unit 84 or when the CPU 86 receives a status signal of the DVD drive through the bus I/F 81 (step S62), if the CPU 86 decides that the DVD decoder 82 of the self unit is to be controlled, the CPU 86 converts a control signal to the DVD decoder 82 into a transmission command to the sub display units 72-2 to 72-n (step S63). Then, the CPU 86 transmits the transmission command through the bus I/F 81 to the sub display units 72-2 to 72-n (step S64), and transmits the control signal to the DVD decoder 72 (step S65). Thereby, the DVD decoders of all the sub display units performing display operations are in the same state as the DVD decoder of the main display unit whose state has been altered by an operation input or the like, and the decoding operation of the main display unit is reflected throughout the decoding operations of all the display units performing display operations.

On the other hand, with reference to figure 21, when a control command is inputted to the self unit in step S72, the CPU 86 of the sub display unit controls the DVD decoder 82 on the basis of the control command signal received from the bus T/F 81 (step S73). Thereby, the DVD decoders of all the sub display units performing display operations are in the same state as the DVD decoder of the main display unit whose state has been altered by an operation input or the like, and the decoding operation of the main display unit is reflected throughout the decoding operations of all the display units performing display operations.

In the disc playback system according to the second embodiment, the main display unit transmits the parameters which are used for display operation of the self unit, to another display unit which has started up newly. On the other hand, in the disc playback system according to the fourth embodiment, the disc drive is provided with the parameter storage unit for holding the parameters which are used for display operation of the display unit performing the display operation, and transmits the parameters used by the display unit performing the display operation to another display unit which has started up newly. However, means (parameter control means) for holding the parameters used for display operation of the display unit performing the display operation, and transmitting the parameters to another display unit which has started up newly may be provided outside the display unit or the disc drive.

In the second to fourth embodiments of the present invention, the parameters are transmitted when the sub display unit starts up or when the main display unit or the sub display unit receives an operation input. However, the parameters may be transmitted periodically, or the parameters may be transmitted at an arbitrary timing such as when the values of the parameters which are stored in the main display unit are altered or when the sub display unit requests transmission of the parameters.

In the second to fourth embodiments of the present invention, the items of the parameters to be transmitted from the main display unit to the sub display unit may be all or part of the items of the parameters stored in the main display unit.

While in the second to fourth embodiments the main display unit transmits the parameters to the sub display unit, the sub display unit may read the parameters from the main display unit.

When the sub display unit requests transmission of parameters from the main display unit and when the sub display unit reads the parameters from the main display unit, the sub display unit may specify the parameter items.

While in the second to fourth embodiment the sub display unit controls the playback and display operation of the self unit according to the parameter received, the main display unit may control the playback and display operations of the sub display unit on the basis of the parameters stored in the self unit.

While in the second to fifth embodiments a DVD is employed an example of a disc type recording medium, the present invention is applicable to other recording modiums such as a Video-CD and the like.

While in the second to fifth embodiment each display unit is constructed such that a decoder for decoding a coded signal recorded on a DVD is integrated with a display for displaying pictures, the decoder and the display may be separated as different units.

While in the respective embodiments of the present invnention a decoder is implemented by hardware, it may be implemented by software which is operated on a computer.

## Claims

1. A disc playback system comprising a disc drive for reading a coded signal recorded on a disc type recording medium, and transmitting the coded signal through a synchronous channel of a digital bus, and plural display units each receiving the coded signal from the digital bus, and decoding and displaying the coded signal, wherein:
each of the plural display units outputs disc control information including a read command for controlling the disc drive so as to read the coded signal from the disc type recording medium; and
one of the plural display units receives the disc control information from the other display units, and the display unit receives, at least as for the read command, the read commands from all of the other display units which are operating and, thereafter, outputs one read command to the disc drive.

2. A disc playback system comprising a disc drive for reading a coded signal recorded on a disc type recording medium, and transmitting the coded signal through a synchronous channel of a digital bus, and plural display units each receiving the coded signal from the digital bus, and decoding and displaying the coded signal, wherein:
each of the plural display units performs operation on the basis of a periodic signal whose temporal relationship with data on the synchronous channel is constant;
one of the plural display units generates decoder control information including at least a playback command, outputs the decoder control information to the other display units, and executes decoder control at a timing when a predetermined time t (t: positive real number) has passed from the n-th periodic signal (n: natura number) after the display unit outputted the decoder control information; and
each of the other display units receives the decoder control information, and executes decoder control at a timing when the predetermined time t has passed from the n-th periodic signal after the display unit received the decoder control information.

3. The disc playback system of Claim 2, wherein the decoder control information includes a pause command.

4. The disc playback system of Claim 2 or 3, wherein a signal indicating a frame period of the digital bus is used as the periodic signal.

5. The disc playback system of any one of claims 1 to 4,
wherein the disc type recording medium is a DVD.

6. A disc playback system comprising a disc drive for reading a coded signal recorded on a DVD, and transmitting the coded signal through a synchronous channel of a digital bus, and plural display units for receiving the coded signal from the digital bus, and decoding and displaying the coded signal, wherein:
each of the plural display units generates an operation clock of 27MHz from a transmission path clock of the digital bus, and performs decoding operation on the basis of the operation clock.

7. The disc playback system of any one of the preceding claims, wherein the digital bus is a vehicle-mounted digital bus to be mounted on motor vehicles.

8. A display unit for receiving a coded signal which is read from a disc type recording medium by a disc drive, and decoding and displaying the coded signal, including:
a disc control information output means for outputting disc control information including a read command for controlling the disc drive so as to read the coded signal from the disc type recording medium:
wherein the disc control information output means receives disc control information including the read command from other display units connected to the digital bus, and it receives, at least as for the read command, the read commands from all of the other display units connected to the digital bus and, thereafter, outputs one read command to the disc drive.

9. A display unit for receiving a coded signal which is read from a disc type recording medium by a disc drive and transmitted through a synchronous channel of a digital bus, and decoding and displaying the coded signal,
the display unit performing operation on the basis of a periodic signal whose temporal relationship with data on the synchronous channel is constant; and
the display unit comprising:
a decoder control information generation means for generating decoder control information including at least a playback command;
a decoder control information output means for outputting the decoder control information generated by the decoder control information generation means to another display unit connected to the digital bus; and
a decoder control means for executing decoder control, employing the decoder control information generated by the decoder control generation means, at a timing when a predetermined time t (t: positive real number) has passed from the n-th periodic signal (n: natural number) after the decoder control information output means outputted the decoder control information to the other display unit.

10. A display unit for receiving a coded signal which is read from a disc type recording medium by a disc drive and transmitted through a synchronous channel of a digital bus, and decoding and displaying the coded signal,
the display unit performing operation on the basis of a periodic signal whose temporal relationship with data on the synchronous channel is constant, and
the display unit comprising:
a decoder control information reception means for receiving decoder control information including at least a playback command, from another display unit connected to the digital bus; and
a decoder control means for executing decoder control, employing the decoder control information received by the decoder control reception means, at a timing when a predetermined time t (t: positive real number) has passed from the n-th periodic signal (n: natural number) after the decoder control information recaption means received the decoder control information from the other display unit.

11. A display unit for receiving a coded signal from a digital bus, and decoding and displaying the coded signal, including:
a decoding clock generation means for generating a decoding clock of 27MHz for performing decoding operation, from a transmission path clock of the digital bus.

12. A disc playback system comprising a disc drive for reading and outputting a coded signal recorded on a disc type recording medium, and plural display units for decoding and displaying the coded signal outputted from the disc drive, including:
a parameter control means performing a control such that a display unit which is performing display operation holds parameters used for the display operation and, when another display unit has started up, the display unit performing display operation transmits the parameters to the other display unit which has started up.

13. A disc playback system comprising a disc drive for reading and outputting a coded signal recorded on a disc type recording medium, and plural display units for decoding and displaying the coded signal outputted from the disc drive, wherein:
one of the display units performing display operations transmits parameters which are stored in the self unit and used for the display operation, to another display unit which has started up.

14. A disc playback system comprising a disc drive for reading and outputting a coded signal recorded on a disc type recording medium, and plural display units for decoding and displaying the coded signal outputted from the disc drive, wherein:
the disc drive is provided with a parameter storage means for holding parameters which are used for display operation of a display unit and, when another display unit has started up, the disc drive transmits the parameters which arc used by the display unit performing the display operation, to the other display unit which has started up.

15. A disc playback system comprising a disc drive for reading and outputting a coded signal recorded on a disc type recording medium, and plural display units for decoding and displaying the coded signal outputted from the disc drive, wherein:
when at least one of the plural display units receives an operation input from a user to the self unit and parameters which are stored in the self unit and used for display operation are altered, the display unit transmits the altered parameters to all of the other display units performing display operations.

16. A disc playback system comprising a disc drive for reading and outputting a coded signal recorded on disc type recording medium, and plural display units for decoding and displaying the coded signal outputted from the disc drive, wherein:
one of the plural display units controls the disc drive;
when a display unit other than the display unit controlling the disc drive receives a user's operation input for controlling the disc drive, the display unit transmits a control command for controlling the disc drive to the display unit controlling the disc drive; and
when the display unit controlling the disc drive receives the control command for controlling the disc drive from the display unit other than the selt unit, it controls the disc drive on the basis of the control command, and transmits altered parameters to all of the other display units performing display operations.

17. The disc playback system according to any of Claims 12 to 16,
wherein the parameters are data for resumption.

18. A disc playback system comprising a disc drive for reading and outputting a coded signal recorded on a disc type recording medium, and plural display units for decoding and displaying the coded signal outputted from the disc drive, wherein:
the display units include decoding means for decoding the coded signal; and
one of the display units transmits a control signal to the decoding means of the other display units.

19. The disc playback system of any one of claims 12 to 18,
wherein the disc drive and the plural display units are connected with each other through a vehicle-mounted digital bus to be mounted on motor vehicles.
